# EUROPEAN PATENT APPLICATION

(11) **EP 3 945 257 A1**
(43) Date of publication of application: **02.02.2022**
(21) Application number: 21187835.0
(22) Date of filing: 27.07.2021
(51) Int. Cl.: F24F 8/108, F24F 11/79, F24F 13/20, F24F 110/50, F24F 13/28

(54) **AIR CLEANER**

(30) Priority: 30.07.2020 KR 20200094896
(71) Applicant: LG Electronics Inc., Seoul 07336 (KR)
(72) Inventor: PARK, Dongryul, 08592 Seoul (KR); YOON, Juhyup, 08592 Seoul (KR); LEE, Jongsu, 08592 Seoul (KR); LEE, Nuree, 08592 Seoul (KR); GIM, Yeonghyeon, 08592 Seoul (KR)
(74) Representative: Vossius & Partner Patentanwälte Rechtsanwälte mbB

(57) **Abstract**

The present disclosure relates to an air cleaner. The air cleaner according to the present disclosure includes: blower units having blower unit fans disposed therein, and air inlets formed therein; filters serving to filter out foreign substances contained in air suctioned through the air inlets into the blower units; a wind direction control unit configured to control a flow direction of air discharged outside of the blower units by the blower unit fans; and a controller configured to control the wind direction control unit so that the flow direction of the air discharged outside through the wind direction control unit is controlled by the wind direction control unit after receiving information on air quality outside of the blower unit. Accordingly, by controlling the wind direction of air, discharged from the circulator or the discharge guider, based on indoor air quality signals, clean air may be supplied intensively to a highly polluted area, thereby improving air cleaning efficiency.

## Description

The present disclosure relates to an air cleaner, a controller disposed in the air cleaner, and an air cleaning system including the air cleaner and one or more sensors for detecting air quality.

An air cleaner is a device that draws in contaminated air and performs a series of air cleaning operations to supply purified air.

When the purified air is supplied indoors, it is important to supply clean air to a highly polluted local area within a target indoor space in terms of air cleaning efficiency. Accordingly, the air cleaner requires a device for controlling a wind direction of clean air discharged according to the quality of indoor air.

However, when the air cleaner detects the air quality in each indoor area while controlling the wind direction at the same time, there is a difficulty in setting a method of connecting and controlling an air quality detection device and a wind direction controller. Further, when the air cleaner detects the air quality in an indoor space, there is a problem in that jamming factors around sensors may reduce accuracy of the measured indoor air quality.
Korean Patent No. 10-1881509 discloses a control method of turning on/off an air cleaner according to a pollution level of indoor air. However, the control method has a problem in that the method fails to disclose a structure for controlling a direction of clean air toward a polluted local area, such that air cleaning efficiency is reduced.
Korean Patent No. 10-1728407 discloses a method of collecting temperature signals and bio-signals in indoor areas using position sensors, and controlling a heating mode of an air conditioner based on the collected information. However, the method also has problems in that the control method is focused on heating, such that it is not suitable for use in reflecting information on the indoor air quality; and a method of controlling a wind direction based on the collected information is not disclosed, such that air cleaning efficiency is reduced.

It is an object of the present disclosure to provide an air cleaner for selectively supplying clean air to a highly polluted local area.

It is another object of the present disclosure to provide an air cleaner in which an arrangement position of a controller for controlling a wind direction is optimized.

It is yet another object of the present disclosure to provide an air cleaner in which interference with jamming factors is minimized when air quality information is collected.

It is still another object of the present disclosure to provide an air cleaner having a simplified structure in which a wind direction may be controlled based on air quality information.

It is still another object of the present disclosure to provide an air cleaner in which the wind direction of air discharged from a plurality of air outlets may be controlled at the same time.

It is still another object of the present disclosure to provide an air cleaner in which air cleaning efficiency may be maximized by reflecting pollution levels of a plurality of indoor areas.

It is still another object of the present disclosure to provide an air cleaner in which a controller for controlling a wind direction may be supported stably.

It is still another object of the present disclosure to provide an air cleaner which may be manufactured in a compact size with less wasted space.

The objects of the present disclosure are not limited to the aforementioned objects and other objects not described herein will be clearly understood by those skilled in the art from the following description.

The invention defined in the appended independent claim solves the above-identified problems and thus achieves the objects identified above. Preferred aspects of the invention are defined by the appended dependent claims.

In the following description, there is provided an air cleaner which includes: blower units having blower unit fans disposed therein, and air inlets formed therein; filters configured to filter out foreign substances contained in air suctioned through the air inlets into the blower units; a wind direction control unit configured to control a flow direction of air discharged from the blower units by the blower unit fans; and a controller configured to receive information on air quality outside of the blower units and to control the wind direction control unit based on the received information. Accordingly, clean air can be supplied intensively to a highly polluted local area based on the information on the indoor air quality.

The controller may include: a position sensor configured to receive the information on the air quality outside of the blower units. An separate data processor may be provided to control the wind direction control unit, such that receiving of air quality signals and controlling of motors may be performed separately.

The controller may communicate with air quality sensors to detect the air quality outside of the blower unit. Information on the detected air quality may be shared through wireless communications, preferably using Ultra Wide Band (UWB).

The air quality sensors may be disposed outside of the blower units at positions spaced apart from each other. The air quality information may be collected at various different positions.

The wind direction control unit may include a discharge guider which is rotatably disposed at the blower units. The rotation of the discharge guider is controlled by the controller, such that the controller may control the flow direction of air passing through the discharge guider.

The wind direction control unit may include a circulator which is tiltably coupled to the blower units. The tilting or rotation of the circulator is controlled by the controller, such that the controller may control the flow direction of air passing through the circulator.

The controller may be disposed in fan housings in which the blower unit fans are received (i.e., in which the fans are disposed), such that the controller may be disposed in a space where radio interference is minimized.

The fan housings may have a controller cover protruding in a direction further away from the blower unit fans. The controller cover is arranged to form a receiving space for receiving the controller, such that radio interference with the air flow may be minimized.

The fan housings may have a reinforcement rib extending in a circumferential direction from a position where the controller is received, thereby stably supporting the controller.

The fan housings may have a housing plate extending inward of the fan housings between the controller and the blower unit fans, such that the effect of an air flow on the controller may be minimized.

The controller may be disposed at a position spaced apart inwardly from an outer wall of the blower units, such that interference between the controller and a molded product may be minimized.

The controller may be fixed to the blower units by a coupling member. A pressing member, through which the coupling member passes, may be pressed against the controller, thereby supporting the controller.

The coupling member may be coupled to the blower units at a position inward of the position where the controller is disposed, thereby minimizing radio interference at the controller.

A coupler, into which the coupling member is inserted, may be disposed at a position spaced apart from the center of the controller in a circumferential direction, such that the coupler may be spaced apart from the controller by a maximum distance.

The blower units may have support ribs on which the controller is mounted, such that the controller may be supported stably.

The controller may be disposed between a pair of upper fences spaced apart from each other in a circumferential direction of the blower units, such that movement of the controller may be restricted.

The controller may be disposed between the fan housings, in which the blower units are received, and filter frames from which the filters are removed, such that the controller may be fixed to the inside the blower units.

The controller may be disposed at a position spaced apart from the sensor assembly, disposed between the fan housings and the filter frames, in a circumferential direction, thereby minimizing interference with the sensor assembly.

The filter frame may have a controller housing forming a receiving space for receiving the controller, thereby receiving the controller along with the controller cover.

The filter frames may have a pair of lower fences spaced apart from each other in a circumferential direction of the blower units, such that the controller may be disposed between the pair of lower fences.

The fan housings may have a connection plate protruding toward the filter frames, such the fan housings and the filter frames may be coupled to each other via the connection plate.

The connection plate may be at least partially inserted into the filter frames to be coupled to the filter frames, such that the fan housings and the filter frames may be stably coupled to each other.

Other detailed matters of the exemplary embodiments are included in the detailed description and the drawings.

The air cleaner according to the present disclosure has one or more of the following effects.
Firstly, by controlling a wind direction of air discharged from a circulator or a discharge guider based on indoor air quality signals, clean air may be supplied intensively to a highly polluted area, thereby improving air cleaning efficiency.
Secondly, by providing a controller at a position where radio waves may be collected with less interference, a positional arrangement of the controller with respect to other structural elements may be optimized.
Thirdly, by adjusting the (arrangement) position of the controller, it is possible to prevent other structures from interrupting reception of air quality signals.
Fourthly, by simplifying an arrangement and connection between the controller and motors, an internal space of the blower units may be used efficiently.
Fifthly, by controlling rotation of the circulator and the discharge guider at the same time, an amount of clean air discharged to a polluted local area may be increased in a particular direction, preferably toward a high air-polluted area in an indoor space where the air cleaner is installed.
Sixthly, by providing a structure with a coupling member, a pressing member, support ribs, and fences, the controller may be supported stably and reliably.

The effects of the present disclosure are not limited to the aforesaid, and other effects not described herein will be clearly understood by those skilled in the art from the following description of the appended claims.

### BRIEF DESCRIPTION OF THE DRAWINGS

FIG. 1 is a perspective view of an air cleaner according to the present disclosure.
FIG. 2 is a longitudinal sectional view of an air cleaner according to the present disclosure.
FIG. 3 is an exploded perspective view of a base and a blower unit according to the present disclosure.
FIG. 4 is a top perspective view and a bottom perspective view of a fan housing according to the present disclosure.
FIG. 5 is a view, as seen from one side, of a connection relationship between a fan housing and a controller according to the present disclosure.
FIG. 6 is a view, as seen from the other side, of a connection relationship between a fan housing and a controller according to the present disclosure.
FIG. 7 is a view, as seen from the front, of a connection relationship between a fan housing and a controller according to the present disclosure.
FIG. 8 is a view, as seen from below, of a connection relationship between a fan housing and a controller according to the present disclosure.
FIG. 9 is a view, as seen obliquely from below, of a connection relationship between a fan housing and a controller according to the present disclosure.
FIG. 10 is a perspective view of a filter frame according to the present disclosure.
FIG. 11 is a view, as seen from above, of a filter frame according to the present disclosure.
FIG. 12 is a perspective view of a circulator according to the present disclosure.
FIG. 13 is a partially enlarged view of a longitudinal section of an air cleaner according to the present disclosure.
FIG. 14 is a view, as seen from below, of a moving guider according to the present disclosure.
FIG. 15 is a view explaining an arrangement structure of a discharge guider according to the present disclosure.
FIG. 16 is a view explaining a structure of a discharge body according to the present disclosure.
FIG. 17 is a perspective view of a discharge guider according to the present disclosure.
FIG. 18 is a view explaining a rotating structure of a discharge guider according to the present disclosure.
FIG. 19 is a cross-sectional view of vanes of a discharge guider according to the present disclosure.
FIG. 20 is a conceptual view of a motor control method of a controller according to the present disclosure.

Advantages and features of the present disclosure and methods of accomplishing the same will be more clearly understood from exemplary embodiments described below with reference to the accompanying drawings. However, the present disclosure is not limited to the following embodiments but may be implemented in various different forms. The embodiments are provided only to complete disclosure of the present disclosure and to fully provide a person having ordinary skill in the art to which the present disclosure pertains with the category of the present disclosure, and the present disclosure will be defined by the scope of the appended claims. Wherever possible, like reference numerals generally denote like elements through the specification.

Hereinafter, embodiments of the present disclosure will be described with reference to the accompanying drawings for explaining the air cleaner.

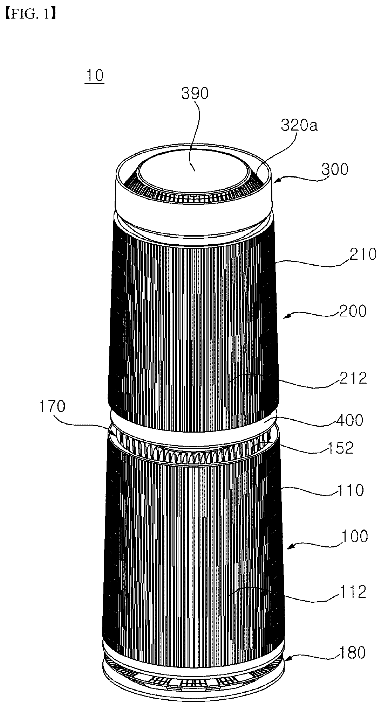

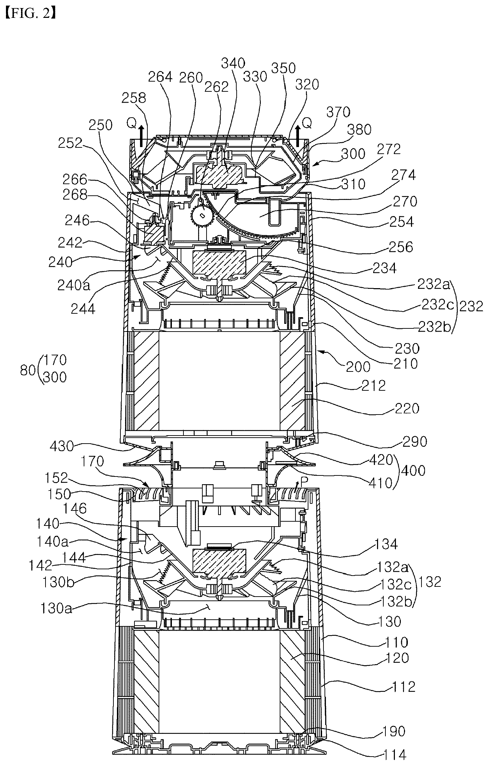

Referring to FIGS. 1 and 2, the overall configuration of the air cleaner 10 will be descried below. FIG. 1 is a perspective view of the air cleaner 10 as seen from above, and FIG. 2 is a longitudinal sectional view of an internal structure of the air cleaner 10.

The air cleaner 10 includes blower units 100 and 200 for generating an air flow. The air cleaner 10 further includes a circulator 300 for changing a discharge direction of the air flow generated by the blower units 100 and 200. The blower units 100 and 200 may include a lower blower unit 100 for discharging clean air to a relatively lower region, and an upper blower unit 200 for discharging clean air to a relatively upper region.

Different from the structure illustrated in FIG. 1, an air cleaner may include only a single-stage blower unit 200, only the single-stage blower unit 200 and the circulator 300, only dual-stage blower units 100 and 200, triple-stage or more blower units, or the triple-stage or more blower units and the circulator 300. Here, the term "single-stage" means to have one single blower unit, and the term "dual-stage" means to have two blower units arranged vertically with each ther.

The lower blower unit 100 and the upper blower unit 200 may be disposed in a vertical direction. The upper blower unit 200 may be disposed over the lower blower unit 100 at a distance.

The air cleaner 10 may include cases 110 and 210 forming the exterior of the blower units 100 and 200. The cases 110 and 210 may include a lower case 110 forming the exterior of the lower blower unit 110, and an upper case 210 forming the exterior of the upper blower unit 200.

The lower case 110 may have an overall cylindrical shape and may have a diameter which is smaller at the top than at the bottom.

The lower case 110 has a first suction port 112 through which air is suctioned. The first suction port 112 may be referred to as an air inlet 112 through which outside air flows into the lower case 110. A plurality of first suction ports 112 may be formed along a circumferential surface of the lower case 110, and may be open from top to bottom. A first discharge port 152, through which the suctioned air is discharged to the outside, is formed at the upper part of the lower case 110, and the first discharge port 152 may be open upwardly. The first discharge port 152 may be referred to as an air outlet 152, through which air in the lower case 110 is discharged to the outside.

A discharge guider 170 for controlling a flow direction of air discharged to the outside of the blower units 100 and 200 may be disposed at the blower units 100 and/or 200. The discharge guider 170 may be disposed at a top portion of the lower blower unit 100, and may be disposed on a downstream side of the first fan 132 which will be described later.

The plurality of first suction ports 112 may be arranged evenly in a circumferential direction of the lower case 110, so that air may be suctioned radially in all directions relative to the lower case 110.

A first discharge cover 150, forming the first discharge port 152, may be disposed at the upper part of the lower blower unit 100. The first discharge cover 150 may be referred to as a discharge body 150 for guiding a flow direction of air, which flows upward, to a predetermined discharge direction.

A first filter 120 is removably disposed in the lower case 110. The first filter 120 may have a cylindrical shape, and may filter out foreign substances, contained in the suctioned air, through an outer circumferential surface of the first filter 120.

A first filter frame 190 may provide a space, in which the first filter 120 may be removably disposed, and may be disposed on the outside of the first filter 120. The first filter 120 may be supported by the first filter frame 190, and the first filter frame 190 may define a mounting space for mounting the first filter 120.

A first fan housing 130 may be disposed above the first filter 120. The first fan housing 130 may include a first fan 132 rotatably disposed therein, and a first fan motor 134 supplying power to the first fan 132.

A first housing suction hole 130a, which has a circular shape and into which air passing through the first filter 120 is suctioned, may be formed below the first fan housing 130. A first housing discharge hole 130b, through which air blown by the first fan 132 flows, may be formed above the first fan housing 130. A mixed flow fan may be used as the first fan 132, and air blown by the first fan 132 may flow radially outward and upward.

The first fan 132 may include: a first hub 132a to which a rotating shaft of the first fan motor 134 is coupled; a first shroud 132b being spaced apart from the first hub 132a; and a plurality of first blades 132c disposed between the first hub 132a and the first shroud 132b. The first fan motor 132 may be coupled at the top of the first fan 132.

A first blowing guider 140 for upwardly guiding the air, blown by the first fan 132, may be disposed above the first fan 132.

The first blowing guider 140 may form an annular first air-blowing passage 140a, through which the air blown by the first fan 132 flows.

The first blowing guider 140 may include: a first blower unit body 142 having a cylindrical shape and forming an exterior thereof; a bowl-shaped first motor cover 144 which is disposed at a center portion of the first blower unit body 142 and into which the first fan motor 134 is inserted; and a plurality of first guide vanes 146 being spaced apart from each other in a circumferential direction on the first air-blowing passage 140a disposed between the first blower unit body 142 and the first motor cover 144.

The plurality of first guide vanes 146 may upwardly guide air discharged from the first fan 132 to the first air-blowing passage 140a. The respective first guide vanes 146 may be formed in the shape of curved ribs standing upright so as to be close to the vertical axis direction. The first guide vanes 146 may extend from an outer circumferential surface of the first motor cover 144 to an inner circumferential surface of the first blower unit body 142, and the plurality of first guide vanes 146 may be spaced apart from each other.

A rotating shaft of the first fan motor 134 may extend downwardly from the first fan motor 134, and may pass through a bottom surface of the first motor cover 144 to be coupled to the first hub 132a.

A base 180, coming into contact with the ground, may be disposed below the lower case 110. The base 180 may be spaced apart downwardly from a lower end of the lower case 110; and a base suction part 114, into which external air is suctioned, may be formed in a separating space between the lower case 110 and the base 180.

A shield body 400 for restricting the upward flow of air, discharged from the discharge body 150, may be disposed between the lower blower unit 100 and the upper blower unit 200. By the shield body 400, the upper blower unit 200 may be disposed over lower blower unit 100 at a distance.

The shield body 400 may extend along the air outlet 152. In this case, "extending along the air outlet" may be understood as meaning "extending in a direction parallel to a direction in which the air outlet 152 is formed". Accordingly, the shield body 400 may extend from a position above and at a distance from the air outlet 152, in a direction parallel to the direction the air outlet 152 is formed.

The shield body 410 may block air, discharged from the lower blower unit 100, from flowing into a second suction port 212 of the upper blower unit 200.

The shield body 410 may include a stem 162 coupled to the lower case 110 and extending upward, and a loop 164 disposed above the stem 162. The stem 162 may extend to be rounded upward, and the loop 164 may extend to be rounded downward. The stem 410 may extend upward from the discharge guider 150, and at least a portion of the stem 162 may be formed with a curved surface having a predetermined radius of curvature.

The discharge body 150 of the lower blower unit 100 may be disposed below the shield body 160, and a support plate 170, on which the upper blower unit 200 is seated, may be disposed above the shield body 160.

The support plate 170 may have an annular shape and may extend to be rounded upward from an inner circumferential surface toward an outer circumferential surface.

The upper case 210 may have an overall cylindrical shape and may have a diameter which is smaller at the top than at the bottom. The upper case 210 has the second suction port 212, through which external air is suctioned. The second suction port 212 may be open from top to bottom, and a plurality of second suction ports 212 may be spaced apart from each other in a circumferential direction.

In the upper blower unit 200, a second filter 220 may be disposed in the second filter frame 290. The above description of the first filter 120 and the first filter frame 190 may also apply equally to the second filter 220 and the second filter frame 290. The filter 120 and the second filter 220 may be equally referred to as a "filter," and the first filter frame 190 and the second filter frame 290 may be equally referred to as a "filter frame."

The upper blower unit 200 may include a second fan 232 disposed above the second filter 220 and blowing the suctioned air, and a second fan motor 234 supplying power to the second fan 232, and a second fan housing 230 receiving the second fan 232. The second fan 232, the second fan motor 234, and the second fan housing 230 may have the same shape and perform the same function as the first fan 132, the first fan motor 134, and the first fan housing 130. The second fan 232 may be a mixed flow fan, and may include a hub 232a, a shroud 232b, and a plurality of blades 232c, as in the first fan 132.

The upper blower unit 200 may further include a second blowing guider 240 disposed above the second fan 232, and upwardly guiding air blown by the second fan 232. The second blowing guider 240 may include a second blower unit body 242 having a cylindrical shape and forming an exterior thereof, and a bowl-shaped second motor cover 244 which is disposed at a center portion of the second blower unit body 242 and into which the second fan motor 234 is inserted. A plurality of second guide vanes 246 spaced apart from each other in a circumferential direction on a second air-blowing passage 240a are formed between the second blower unit body 242 and the second motor cover 244. The second blower unit body 242, the second motor cover 244, and the plurality of second guide vanes 246 may have the same shape and perform the same function as the first blower unit body 142, the first motor cover 144, and the plurality of first guide vanes 146.

A second discharge cover 250, forming a second discharge port 252 which is open upwardly, may be disposed at the upper part of the upper blower unit 200. The second discharge port 252 may have an annular shape, and a second discharge grill 258 which is radially formed may be disposed at the second discharge cover 250.

The second discharge cover 250 may include a second cover wall 254 forming a cylindrical edge, a guide base 256 disposed inside of the second cover wall 254, and the second discharge grill 258 extending radially from the guide base 256 to the second cover wall 254.

The upper blower unit 200 may include a moving guider 260 rotatably disposed at the guide base 256 and supporting the circulator 300, and a mover 270 moving along the moving guider 260 and changing an inclination angle of the circulator 300.

The moving guider 260 may be disposed at an upper part of the guide base 256 and may be rotatably disposed at the guide base 256.

The guide base 256 may have a disk shape, and the second discharge grill 258 may be disposed around the circumference thereof. The moving guider 260 may have a space formed inside thereof, in which a moving gear 262 and a gear motor 263 are disposed.

While being coupled to the circulator 300, the mover 270 may move along the moving guider 260 to change an inclination angle of the circulator 300. The mover 270 may include a guide plate 272 being convex toward the moving guider 260, and a gear rail 274 engaged with the moving gear 262 may be formed at the guide plate 272.

The mover 270 is coupled to a lower surface of the circulator 300, such that a portion of a suction port 310a, formed at a lower part of the circulator 300, may be covered.

An external gear 264 may be formed on one side of the moving guider 260 along a circumferential surface thereof. A pinion gear 266, engaged with the external gear 264 to rotate together therewith, and a motor 268 rotating the pinion gear 266 may be disposed on one side of the second discharge grill 258.

As the moving gear 262 and the gear rail 274 are engaged with each other to rotate together, an inclination angle of the circulator 300 with respect to a vertical axis may be changed. As the external gear 264 and the pinion gear 266 are engaged with each other to rotate together, the circulator 300 may rotate in a circumferential direction with respect to a vertical axis as a rotation axis.

The circulator 300 is disposed over the upper blower unit 200 to change a direction of air discharged upward from the upper blower unit 200. The circulator 300 may be disposed in parallel or at an angle to a plane formed by the second discharge port 252.

The circulator 300 may have a third discharge port 320a having an annular shape. Air discharged from the upper blower unit 200 and flowing into the circulator 300 may be discharged to the outside through the third discharge port 320a.

A display 390 for displaying operation information of the air cleaner 10 may be disposed above the circulator 300. The display 390 may be disposed radially inward of the third discharge port 320a and may form an upper surface of the circulator 300.

The circulator 300 may include: a lower cover 310 forming an exterior of the lower part thereof and coupled to the upper blower unit 200; an upper cover 320 forming an exterior of the upper part thereof and disposed above the lower cover 310; a third fan 330 allowing air to flow into the circulator 300; and a fan motor 340 rotating the third fan 330. The circulator 300 may further include: a motor cover 350 receiving the fan motor 340; a third fan housing 370 receiving the third fan 330; and an outer cover 380 disposed outside of the upper cover 320.

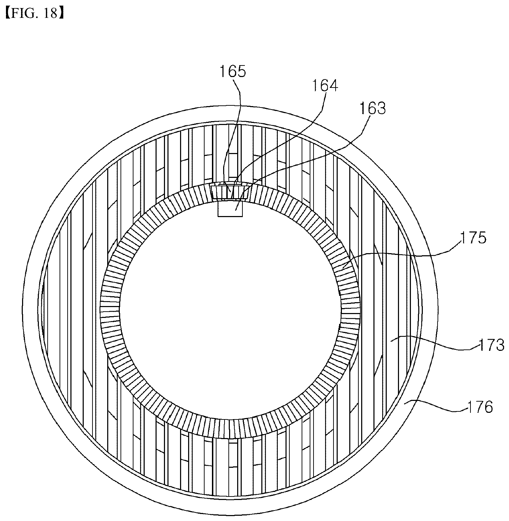

The discharge guider 170 may be rotatably disposed at the blower unit 100, and the rotation of the discharge guider 170 may be controlled by a controller 20 which will be described later. The discharge guider 170 may be disposed at an upper part of the lower blower unit 100, and may be disposed between the first fan 132 and the shield body 400. The discharge guider 170 may have a plurality of vanes 173 (see FIG. 19) which extend obliquely with respect to a vertical axis, and may guide air, discharged outside of the blower unit 100 by the blower unit fan 132, in a first discharge direction P. The discharge guider 170 may rotate in a circumferential direction of the blower units 100 and 200, and the first discharge direction P may be controlled by the rotation of the discharge guider 170.

The circulator 300 may be tiltably coupled to the blower unit 200, and the rotation of the circulator 300 may be controlled by the controller 20 which will be described later. The circulator 300 may be disposed over the upper blower unit 200 and may be disposed on a downstream side of the second fan 232. The circulator 300 may guide air, discharged outside of the blower unit 200 by the blower unit fan 232, in a second discharge direction Q, and air flowing into the circulator 300 may be guided in the second discharge direction Q through the third discharge port 320a. The circulator 300 may rotate in a circumferential direction of the blower unit 200, or may rotate to be tilted with respect to the blower unit 200. The second discharge direction Q may be controlled by the rotation of the circulator 300.

The discharge guider 170 and the circulator 300 may be a wind direction control unit 80 for controlling a flow direction of air discharged from the blower units 100 and 200 by the blower unit fans 132 and 232. The air direction control unit 80 may include the discharge guider 170 and/or the circulator 300, and may be coupled to the controller 20, which will be described later, such that the rotation of the air direction control unit 80 may be controller by the controller 20.

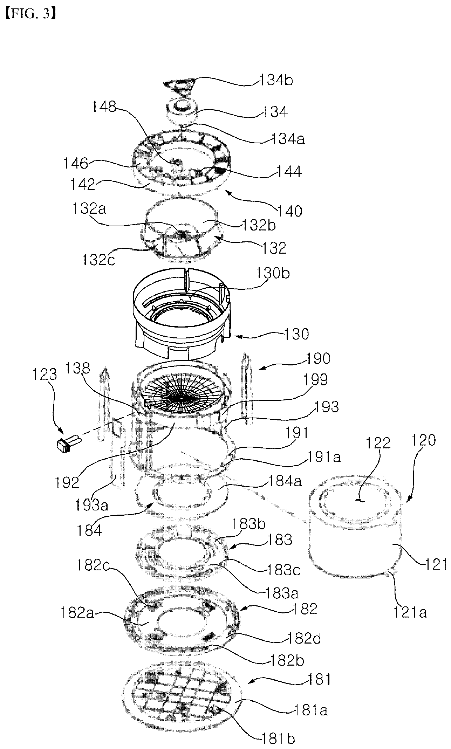

Hereinafter, a detailed structure of the base 180 and the lower blower unit 100 will be described with reference to FIG. 3.

FIG. 3 is a detailed exploded view of the base 180, and components disposed inside the lower blower unit 100.

The base 180 includes a base plate 181 forming a lower side of the base 180; a base grill 182 disposed over the base plate 181; a lever device 183 disposed over the base grill 182; and a support device 184 disposed over the lever device 183.

The base plate 181 may include an under plate 181a being in contact with the ground and forming the lower surface of the air cleaner 10; and a base projecting portion 181b projecting upward from the under plate 181a. The base projecting portion 181b may be formed on both sides of the base plate 181. The under plate 181a and the base grill 182 may be spaced apart from each other by the base projecting portion 181b, such that a base suction portion 114 may be formed between the base plate 181 and the base grill 182.

A suction portion 182b having a plurality of suction holes may be formed on the edge of the base grill 182, and an annular base grill body 182a may extend inward from the edge. A base grill groove 182d may be formed at a portion of the base grill body 182a. The base grill groove 182d may be understood as a space where the suction portion 182b is not formed, on the edge of the base grill 182. Further, a plurality of filter guides 182c for guiding upward or downward movement of the filter 120 may protrude from the upper surface of the base grill body 182a and may be spaced apart from each other in a circumferential direction.

The filter 120 may have a cylindrical shape surrounded by a filter body 121 and having a filter hole 122 formed inside, and a filter holder 121a may protrude from a lower part of the filter body 121. Air flowing into the filter 120 through an outer circumferential surface of the filter body 121 may pass through the filter body 121, so that foreign substances may be filtered from the air, and then the air may flow upward through the filter hole 122. A user may hold the filter holder 121a to separate the filter 120 from the filter frame 190. The filter body 121 may be a cylindrical filter with a prefilter, a HEPA filter, and/or a deodorant filter being radially stacked in layers.

The lever device 183, disposed over the base grill 182 to be operable by a user, may rotate in a circumferential direction. The lever device 183 may have an annular shape and may include a lever body 183a forming an overall exterior thereof. A plurality of cut-out portions 183b may be formed at the lever body 183a at positions corresponding to the filter guides 182c. The cut-out portions 183b may be understood as through holes formed at the lever body 183a. The filter guides 182c may be inserted into the cut-out portions 183b to protrude upward of the lever body 183a. A handle 183c may be provided on an outer circumferential surface of the lever body 183a, and the base grill groove 182d may provide a space for movement of the handle 183c.

The support device 184 for supporting the filter 120 may be disposed over the lever device 183, and support protrusions (not shown) being in contact with the filter guides 182c may be formed at a lower surface of the support device 184. The support device 184 may include a handle connecting part 184a connected to the handle 183c, and a user may hold the connected handle 183c to rotate the lever device 183 and the support device 184.

The filter guides 182c and the support protrusions (not shown) may have inclined surfaces which are tapered in opposite directions, and the inclined surfaces may come into contact with each other. In this case, when a user rotates the lever device 183 and the support device 184 while holding the handle 183c, the filter guides 182c and the support protrusions (not shown) move along the inclined surfaces thereof, such that the support device 184 may move up and down, thus allowing an up-down movement of the filter 120 disposed over the support device 184, and causing the filter 120 to be removable from the filter frame 190.

The filter frame 190 forming a mounting space of the filter 120 may be disposed over the support device 184. The filter frame 190 may include a lower frame 191, forming a lower boundary of the filter frame 190, and an upper frame 192 forming an upper boundary of the filter frame 190. A frame recess 191a, which is recessed downward, may be formed at the lower frame 191. The frame recess 191a is formed at a position corresponding to the base grill groove 182d, to provide a space for rotation of the handle 144. The filter support 193 may extend from the lower frame 191 to the upper frame 192, and a plurality of the filter supports 193 may be spaced apart from each other in a circumferential direction along the edge of the frames 191 and 192. A filter support cover 193a may be coupled to an outer side of the filter supports 193, and the mounting space for mounting the filter 120 may be defined by the frames 191 and 192 and the filter supports 193. The filter 120 may be mounted in the mounting space, and the filter frame 190 may include a sensor assembly 199 for measuring an amount of foreign substances in the air suctioned through the air inlet 112.

A differential pressure sensor 123 for measuring the pressure of air, flowing on the downstream side of the filter 120, may be disposed on the downstream side of the filter 120. The differential pressure sensor 123 may be electrically connected to the display 390 and may determine a replacement period of the filter 120 based on measured pressure values and transmit the determined information to the display 390. The display 390 may display information, transmitted from the differential pressure sensor 123, so that the information may be exposed to the outside.

A fan housing 130 forming a space for receiving the blower unit fan 132 may be formed at an exit side of the filter 120. The fan housing 130 may be supported by the filter frame 190, and an ionizer 138 for eliminating/sterilizing contaminants or odor particles in the air may be disposed in the fan housing 130. The ionizer 138 may be supported by the filter frame 190 as the fan housing 130 and the filter frame 190 are coupled to each other.

The blower unit fan 132 may be received in the fan housing 130. While being coupled to the fan motor 134 via a fan motor rotating shaft 134a, the blower unit fan 132 may be coupled to the fan motor 134 by a fan motor coupling part 134b. Further, the fan motor coupling part 134b may perform a coupling function to allow the fan motor 134 to be fixed to the blowing guider 140.

The blowing guider 140 may be disposed above the blower unit fan 132, and may include the cylindrical blower unit body 142 and the bowl-shaped motor cover 144 disposed inside of the blower unit body 142. An air flow passage 140a may be formed between the blower unit body 142 and the motor cover 144, and the bowl-shaped motor cover 144 receiving the fan motor 134 may form an inner boundary of the air flow passage 140a. In this case, the fan motor rotating shaft 134a may extend downwardly from the fan motor 134 to pass through a bottom surface of the motor cover 144, and then may be coupled to the blower unit fan 132. A coupling rib 148, which protrudes upwardly to be coupled to a coupling guide (not shown) disposed at a lower portion of the discharge guider 150, may be formed on an upper surface of the motor cover 144. A plurality of guide vanes 146, extending from the blower unit body 142 to an outer circumferential surface of the motor cover 144, may be disposed between the blower unit body 142 and the motor cover 144, and may be spaced apart from each other in a circumferential direction. The guide vanes 146 may guide a flow direction of air passing through the blowing guider 140.

The above description of the inner structure of the lower blower unit 100 may also apply equally to the upper blower unit 200, in which the first filter 120 corresponds to the second filter 220, the first filter frame 190 corresponds to the second filter frame 290, the first fan housing 130 corresponds to the second fan housing 230, the first fan 132 corresponds to the second fan 232, the first blowing guider 140 corresponds to the second blowing guider 240, and the first fan motor 134 corresponds to the second fan motor 234.

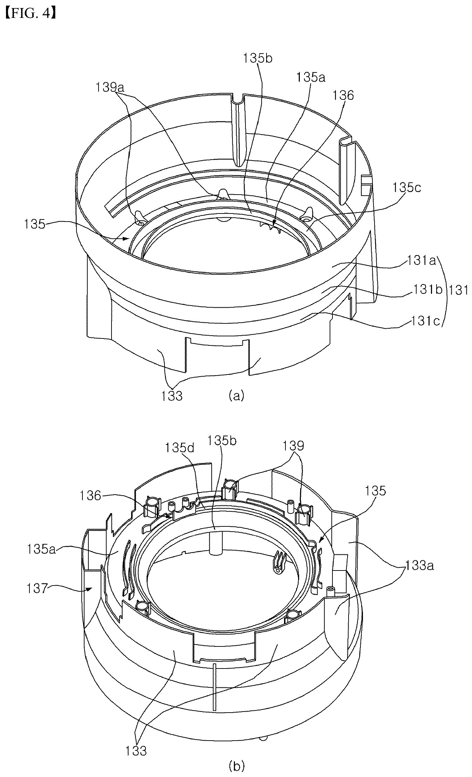

Hereinafter, a structure of the fan housings 130 and 230 will be described with reference to FIG. 4. FIG. 4(a) is a view, as seen from above, of the fan housings 130 and 230; and FIG. 4(b) is a view, as seen from below, of the fan housings 130 and 230. The configuration and structure of the first fan housing 130 are the same as those of the second fan housing 230.

The fan housing 130 may include: a housing outer wall 131 providing a receiving space for receiving the blower unit fan 132; a housing plate 135 extending radially inward from an inner circumferential surface of the housing outer wall 131; and an upper frame cover 133 extending downwardly from a lower part of the housing outer wall 131.

The housing outer wall 131 may include an upper outer wall 131a forming an upper part of the housing outer wall 131; a middle outer wall 131b extending downwardly from a lower end of the upper outer wall 131a; and a lower outer wall 131c extending downwardly from a lower end of the middle outer wall 131b. An outer diameter of the upper outer wall 131a may be greater than an outer diameter of the lower outer wall 131c; and the middle outer wall 131b may be curved to connect the upper outer wall 13 1a and the lower outer wall 131c.

The upper frame cover 133 may extend downwardly from the lower end of the housing outer wall 131, and a plurality of upper frame covers 133 may be spaced apart from each other in a circumferential direction. When the fan housing 130 and the filter frame 190 are coupled to each other, the upper frame cover 133 may be disposed to surround an outer circumferential surface of the upper frame 192. The upper frame cover 133 may include a front cover 133a surrounding a portion of the outer circumferential surface of a sensor assembly cover 199a when the fan housing 130 and the filter frame 190 are coupled to each other.

The housing plate 135 may include: a plate body 135a extending in a radial direction; a rounded portion 135d curved upwardly from the inner end of the plate body 135a; an inner rim 135b extending upwardly from the rounded portion 135d; and an outer rim 135c extending upwardly from the upper surface of the plate body 135a. The outer rim 135c may be disposed outside of the inner rim 135b, and may be disposed in a concentric relationship with the inner rim 135b.

When the fan housing 130 and the filter frame 190 are coupled to each other, a differential pressure sensor holding wall 136, pressing the differential pressure sensor 123, may extend downwardly from a lower surface of the plate body 135a.

The fan housing 130 may include an upper coupling boss 139 coupled to the low coupling boss 197 of the filter frame 190. The upper coupling boss 139 may protrude downwardly from the lower surface of the plate body 135a and may have a hollow cylindrical shape. An inner diameter of the upper coupling boss 139 may be greater than an outer diameter of the lower coupling boss 197, and the lower coupling boss 197 may be received in the upper coupling boss 139.

A coupling boss connecting groove 139a may be formed in the fan housing 130. The coupling boss connecting groove 139a may be open from top to bottom, and may start from the upper surface of the plate body 135a. The coupling boss connecting groove 139a is open from the upper surface to the lower surface of the plate body 135a, to form a through hole in the plate body 135a, and may communicate with the inner space of the upper coupling boss 139. When the fan housing 130 and the filter frame 190 are coupled to each other, the upper coupling boss 139 and the lower coupling boss 197 may be coupled to each other by a predetermined coupling member (not shown) passing through the coupling boss connecting groove 139a.

The fan housing 130 may have a controller cover 137 protruding in a direction further away from the blower unit fan 132 to form a receiving space 137s for receiving the controller 20. The controller cover 137 may extend downwardly from the housing outer wall 131, and may protrude downward from the housing plate 135. The controller cover 137 may be disposed at a position opposite the front cover 133a, and may be formed at a position spaced 180 degrees apart from the front cover 133a in a circumferential direction.

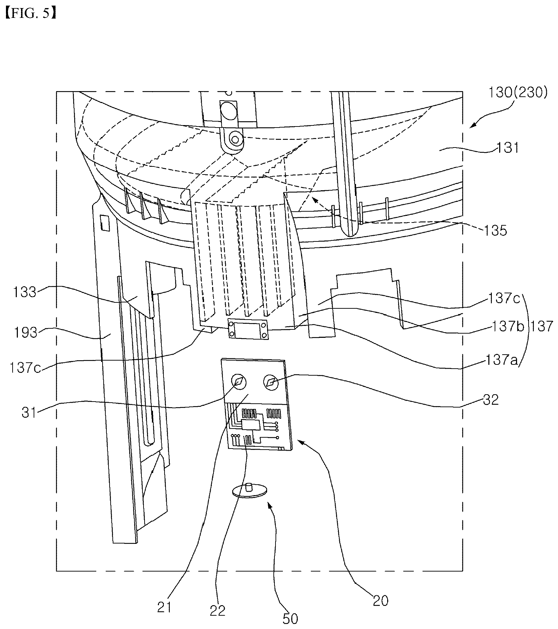

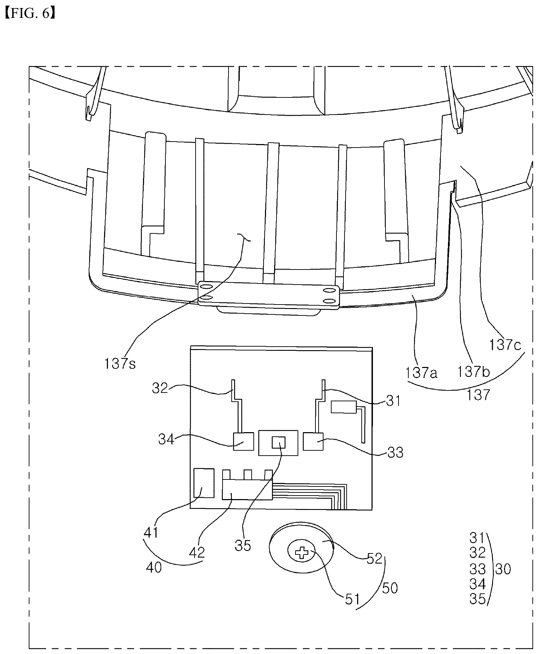

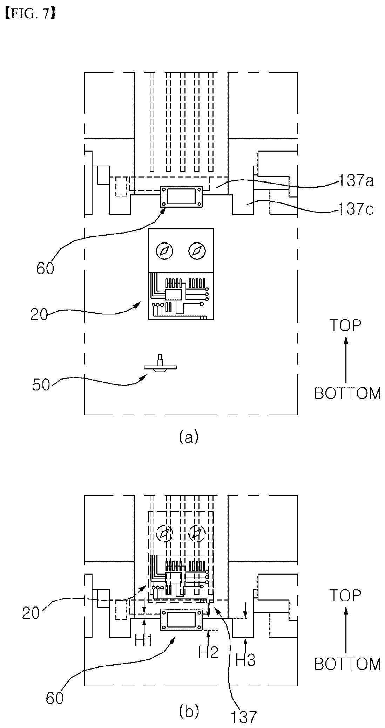

Hereinafter, a structure in which the controller 20 is disposed in the fan housings 130 and 230 will be described with reference to FIGS. 5 to 7. FIG. 5 is a view of the controller 20, as seen from the outside of the fan housings 130 and 230, before the controller 20 is coupled to the fan housings 130 and 230; FIG. 6 is a view of the controller 20, as seen from the inside of the fan housings 130 and 230, before the controller 20 is coupled to the fan housings 130 and 230; FIG. 7(a) is a front view of the controller 20, as seen from the outside of the fan housings 130 and 230, before the controller 20 is coupled to the fan housings 130 and 230; and FIG. 7(b) is a view of the controller 20 coupled on the inside of the fan housings 130 and 230.

The controller 20 may be disposed in the fan housings 130 and 230 and may be disposed in at least either the first fan housing 130 or the second fan housing 230. The controller 20 may be disposed in any one of the first fan housing 130 and the second fan housing 230. The controller 20 is desirably disposed in the second fan housing 230 in order to minimize radio interference. However, the first fan housing 130 and the second fan housing 230 have the same structure, such that for convenience of explanation, the structure of the fan housings 130 and 230 will be described below using the first fan housing 130 as an example.

A plurality of upper frame covers 133 extend downwardly from the housing outer wall 131 to surround an outer circumferential surface of the upper frame 192 of the filter frame 190 disposed below the fan housing 130. The plurality of upper frame covers 133 may be spaced apart from each other in the fan housing 130.

The plurality of upper frame covers 133 may be spaced apart from each other in a circumferential direction of the fan housing 130; and a controller cover 137, providing a receiving space 137s for receiving the controller 20 may be formed between the upper frame covers 133.

The controller cover 137 may extend downwardly from the housing outer wall 131 and may protrude downwardly from the housing plate 135. A radial separation distance between the controller cover 137 and the housing plate 135 may increase toward the lower side. The receiving space 137s in which the controller 20 is disposed may be formed in a separation space between the housing plate 135 and the controller cover 137.

The controller cover 137 may include: a cover outer wall 137a extending downwardly from the housing outer wall 131; and a cover side wall 137b extending radially inward from both ends of the cover outer wall 137a. The controller cover 137 further comprises a reinforcement rib 137c extending in a circumferential direction of the fan housing 130 from an inner end of the cover side wall 137b.

The cover outer wall 137a may be disposed outside of the housing plate 135 and at a distance therefrom, and an inner surface of the cover outer wall 137a may be disposed to face the housing plate 135. The cover outer wall 137a may have an overall rectangular plate shape, and may prevent the controller 20, disposed inside of the cover outer wall 137a, from being separated in a radially outward direction.

The cover side wall 137b may extend radially inward from each of one end portion and the other end portion of the cover outer wall 137a, and may extend perpendicular to the cover outer wall 137a. The height of the cover side wall 137b may be equal to the cover outer wall 137a, and an upper end of the cover side wall 137b may be connected to the housing outer wall 131. A pair of cover side walls 137b, each extending from the end portions of the cover outer wall 137a, may be disposed to face each other, and the controller 20 may be disposed between the pair of cover side walls 137b. The cover side walls 137b may prevent the controller 20, disposed between the pair of cover side walls 137b, from being separated in a circumferential direction of the fan housing 130.

The reinforcement rib 137c may extend from each of the pair of cover side walls 137b in a circumferential direction of the fan housing 130, and may extend in opposite directions. An upper end of the reinforcement rib 137c may be connected to the housing outer wall 131, and a lower end thereof may protrude downward further than the cover outer wall 137a and the cover side wall 137b. The reinforcement rib 137c may extend in a circumferential direction of the fan housings 130 from the receiving space 137s, in which the controller 20 is disposed, thereby improving rigidity of the controller cover 137.

The controller 20 is disposed in the receiving space 137s formed by the controller cover 137, to be fixed by a connector 50. The connector 50 may be directly coupled to the controller 20 to fix the controller 20 to the fan housing 130, or may be directly coupled to the controller 20 to indirectly fix the controller 20 to the fan housing 130. However, considering that the controller 20 may be used as an electronic board performing an electromagnetic function, the controller 20 is desirably fixed to the fan housing 130 in such a manner that as the connector 40 is directly coupled to the fan housing 130, the controller 20 is pressed to be fixed to the fan housing 130.

The connector 50 may include a coupling member 51 coupled to the fan housing 130 and a pressing member 52 through which the coupling member 51 passes. A screw may be used as the coupling member 51, and a washer may be used as the pressing member 52. However, the coupling member 51 and the pressing member 52 are not limited thereto, and other coupling members and pressing members may be used as long as the members may serve to fix the controller 20.

Referring to FIGS. 5 and 6, the shape and structure of the controller 20 are shown. The controller 20 may be formed in the shape of an electronic board, and an Ultra-Wide Band (UWB) chip may be used as the controller 20.

The Ultra-Wide Band (UWB) communication refers to radar-communication techniques using a transmission frequency band of several GHz or more, and radio techniques which provide broadband high-speed data transmission. UWB communication chips may function as a position sensor for identifying the presence of a target object and detecting a distance from the target object and a speed and direction thereof. The UWB communication chips may function as a communication module of a wireless home network with the spread of Internet of Things (IoT) technologies. Accordingly, in the indoor space, information may be shared via radio waves between structures or devices equipped with the UWB communication chips, and the structures or devices may communicate with each other by receiving radar signals transmitted from the respective UWB communication chips.

The controller 20 according to the present disclosure may adopt the principle of the UWB, and rotation of the circulator 300 and the discharge guider 170 may be controlled based on indoor air quality information through wireless communications between the controller 20, disposed in the air cleaner 10, and a plurality of air quality sensors 70 disposed outside of the air cleaner 10.

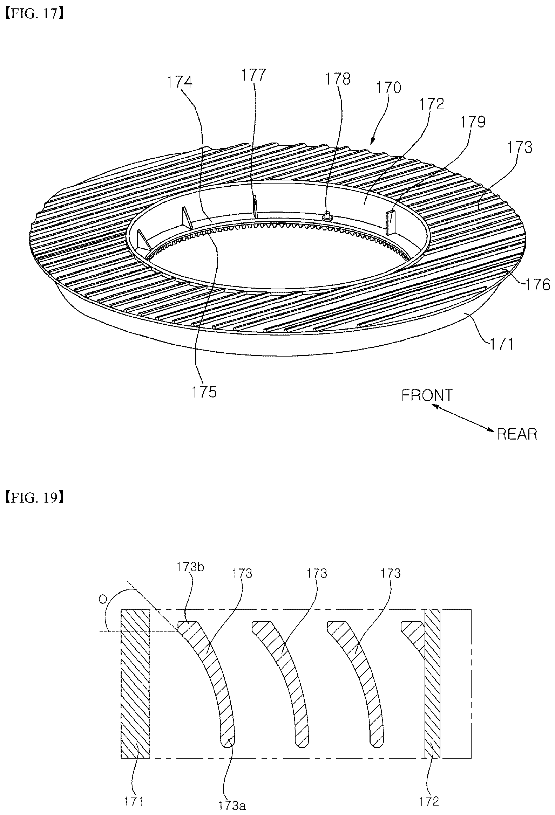

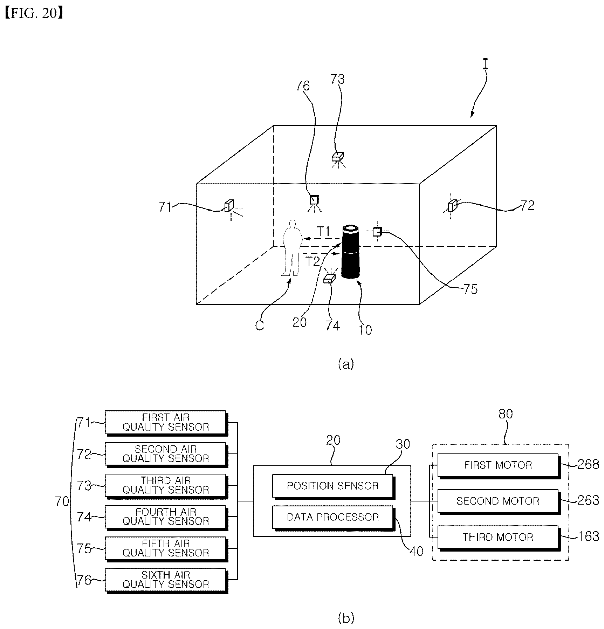

The controller 20 may include a position sensor 30, receiving air quality signals from the air quality sensors 70 (see FIG. 20) disposed outside of the air cleaner 10; and a data processor 40 controlling at least one of the circulator 300 and the discharge guider 170 (see FIG. 17).

The position sensor 30 and the data processor 40 may be provided in a printed form in a single electronic board, and may be electromagnetically connected to each other.

The controller 20 may include a main board 21, on which the position sensor 30 and the data processor 40 are printed; and a circuit board 22 which is electrically mounted on the main board 21. The main board 21 may have an overall rectangular plate shape, and the circuit board 22 may form a lower part of the main body 21.

The position sensor 30 may include a transmission antenna 31 transmitting radio waves to the outside of the controller 20; a reception antenna 32 receiving the waves from the outside of the controller 20; a transmitter 33 processing transmitted information; a receiver 34 processing the received information; and a radio wave generator 35 generating radio waves.

The transmission antenna 31 and the reception antenna 32 may be disposed to face the cover outer wall 137a of the controller cover 137, and may transmit radio waves to the outside of the air cleaner 10 or may receive the radio waves inside the air cleaner 10. The transmission antenna 31 and the reception antenna 32 may be printed on a front surface of the main board 21.

A transmitter 33, a receiver 34, and the radio wave generator 35 may be disposed on a rear surface of the main board 21, and may be disposed to face the housing plate 135.

The data processor 40 may include: a converter 41 configured to convert the radio signal, received at the controller 20, into an electrical signal; and a control part 42 configured to control the rotation of the circulator 300 and the discharge guider 170 based on the electrical signal converted by the converter 41.

The converter 41 and the control part 42 may be disposed on a rear surface of the main board 21, and may be disposed below the circuit board 22. The converter 41 may transmit the electrical signal to the control part 42, and the control part 42 may transmit the received electrical signal to motors 268, 263, and 163.

Referring to FIG. 7, a configuration of the controller 20 mounted in the controller cover 137 is shown.

The controller 20 may be introduced into the controller cover 137 from above, to be disposed in the receiving space 137s. Once the controller 20 is introduced into the controller cover 137, the connector 50 is coupled to the fan housing 130, such that the controller 20 may be pressed to be fixed to the fan housing 130.

The fan housing 130 may be coupled to the filter frame 190, disposed below the fan housing 130, via a connection plate 60, and the connection plate 60 may protrude downwardly from the fan housing 130.

The connection plate 60 may be coupled to the cover outer wall 137a of the controller cover 317, and may protrude downwardly from a lower end of the cover outer wall 137a. The connection plate 60 may be coupled to the cover outer wall 137a while being at least partially inserted therein, and a height H1 of the connection plate 60 inserted into the cover outer wall 137a may be greater than or equal to a height H2 of the connection plate 60 protruding downwardly from the cover outer wall 137a.

The reinforcement rib 137c may extend to protrude downward from the cover outer wall 137a, and a height H3 of the reinforcement rib 137c protruding downward from the cover outer wall 137a may be greater than the height H2 of the connection plate 60 protruding downward from the cover outer wall 137a.

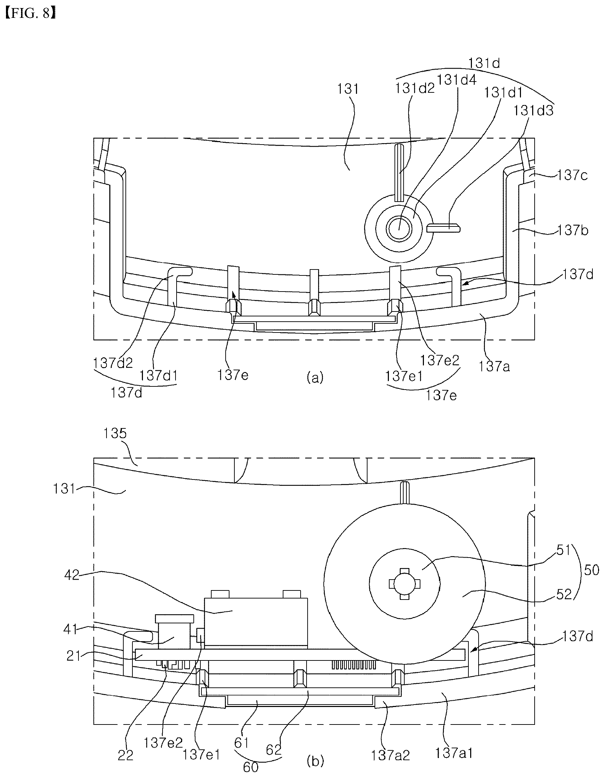

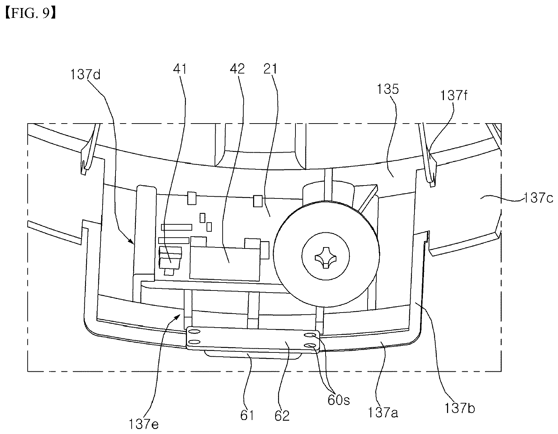

Hereinafter, a structure for fixing and supporting the controller 20 will be described with reference to FIGS. 8 and 9. FIG. 8(a) illustrates the interior of the receiving space 137s before the controller 20 is disposed; FIG. 8(b) illustrates the interior of the receiving space 137s after the controller 20 is disposed; and FIG. 9 is a view, as seen obliquely, of the interior of the receiving space 137s illustrated in FIG. 8(b).

Referring to FIG. 8(a), the fan housing 130 may include a coupler 131d, into which the connector 50 is inserted; a pair of upper fences 137d spaced apart from each other in a circumferential direction; and a plurality of support ribs 137e extending in a vertical direction.

The coupler 131d may be formed at a position spaced apart from the center of the controller 20 in a circumferential direction of the air cleaner, i.e. around a central vertical axis of the air cleaner. This indicates that the coupler 131d may be formed at a position biased to the cover side wall 137b disposed on one side in the receiving space 137s. Accordingly, the coupler 131d may intensively press the one side of the controller 20. The coupler 131 may protrude downwardly from the housing outer wall 131 and may be disposed inward from the controller 20.

The coupler 131d may include: a screw housing 131d1, into which the coupling member 51 is inserted; a first wing 131d2 extending radially inward from the screw housing 131d1; a second wing 131d3 extending in a circumferential direction of the fan housing 130 from the screw housing 131d1; and a screw groove 131d4 formed inside the screw housing 131d1.

An overall shape of the screw housing 131d1 may be a hollow cylindrical shape, and the screw housing 131d1 may extend vertically so that the diameter thereof decreases from top to bottom.

The first wing 131d2 and the second wing 131d3 may extend perpendicular to each other; and the extending height of the first wing 131d2 and the second wing 131d3 may be smaller than or equal to a vertically extending height of the screw housing 131d1. An inner end of the first wing 131d2 may be coupled to the housing plate 135.

The pair of upper fences 137d may protrude radially inward from the inner surface of the cover outer wall 137a. The upper fences 137d may include: a fence side wall 137d1 extending radially inward from the cover outer wall 137a; and a fence inner wall 137d2 extending toward the controller 20 from the inner end of the fence side wall 137d1. A fence inner wall 137d2 of the pair of upper fences 137d may extend in opposite directions. The upper fence 137d may have an overall inverted "L" shape, and the fence side wall 137d1 and the fence inner wall 137d2 may extend perpendicular to each other. The controller 20 may be disposed between the pair of upper fences 137d.

The support rib 137e may protrude radially inward from the cover outer wall 137a. The support rib 137e may include: an outer rib 137e1 protruding radially inward from the cover outer wall 137a, and extending in a vertical direction; and an inner rib 137e2 extending radially inward from an upper end of the outer rib 137e1. A plurality of support ribs 137e may be spaced apart from each other in a circumferential direction of the fan housing 130 and may be disposed between the pair of upper ribs 137d. The support rib 137e may have an overall inverted "L" shape, and the outer rib 137e1 and the inner rib 137e2 may extend perpendicular to each other. An outer surface of the outer rib 137e1 may be coupled to the cover outer wall 137a, and an upper surface of the inner rib 137e2 may be coupled to the housing outer wall 131. The controller 20 is disposed inside the receiving space 137s, such that radially outward movement of the controller 20 may be restricted by the outer rib 137e1, and upward movement thereof may be restricted by the inner rib 137e2.

Referring to FIG. 8(b), the controller 20 may be introduced into the receiving space 137s to be fixed to the fan housing 130 by the connector 50.

While passing through the pressing member 52, the coupling member 51 may be fixed to the coupler 131d along with the pressing member 52. The coupling member 51 may be inserted into the screw groove 131d4 to be fixed thereto, and a screw thread may be formed on an outer circumferential surface of the screw groove 131d4. As the coupling member 51 is inserted into the screw groove 131d4 and is fixed thereto, an upper surface of the pressing member 52 may be pressed against the screw housing 131d2 and a lower surface thereof may be pressed against the coupling member 51. As the coupling member 51 is fixed to the coupler 131d, the upper surface of the pressing member 42 may be pressed against the lower surface of the controller 20, thereby applying an upward force to the controller 20, such that the controller 20 may be pressed to be fixed to the fan housing 130.

While the controller 20 is disposed inside the receiving space 137s, the main board 21 and the circuit board 22 may be disposed between the pair of upper fences 137d, and may be supported by the support ribs 137e. At least a portion of the converter 41 and the control part 42 may protrude radially inward from the inner rib 137d2.

Referring to FIG. 9, at least a portion of the connection plate 60 may be inserted into the cover outer wall 137a to be fixed thereto. In order to secure an insertion space of the connection plate 60, the cover outer wall 137a may be partially cut out, and the cover outer wall 137a may include: a first cover outer wall 137a1 extending in a circumferential direction from the cover side wall 137b; and a second cover outer wall 137a2 formed with a step at an end portion of the first cover outer wall 137a1. Athickness of the first cover outer wall 137a1 may be greater than the second cover outer wall 137a; and an outer surface of the second cover outer wall 137a2 may form a continuous surface of the controller cover 137 along with an outer surface of the first cover outer wall 137a1.

The connection plate 60 may include: a center plate 61 inserted into the cover outer wall 137a to come into contact with an end portion of the second cover outer wall 137a2; and an edge plate 62 inserted into the cover outer wall 137a to come into contact with an end portion of the first cover outer wall 137a1. The center plate 61 may be disposed radially outward of the edge plate 62, and an inner surface of the center plate 61 may be coupled to the outer surface of the edge plate 62. An area of the center plate 61 may be smaller than an area of the edge plate 62, and the center plate 61 and the edge plate 62 may be formed in the shape of a rectangle having different areas.

The edge plate 62 may have through holes 60s through which a predetermined connection member is inserted. A plurality of through holes 60s may be formed at the edges of the edge plate 62, and four through holes 60s may be formed at the respective edges.

The controller cover 137 may have an inner reinforcement rib 137f protruding radially inward from the inner surface of the reinforcement rib 137c. The inner reinforcement rib 137f may extend radially inward from the upper portion of the reinforcement rib 137c, and may be coupled to the lower surface of the housing plate 135. A plurality of inner reinforcement ribs 137f may be spaced apart from each other in a circumferential direction of the housing plate 135, and at least some of the inner reinforcement ribs 137f may extend radially inward along the lower surface of the housing plate 135.

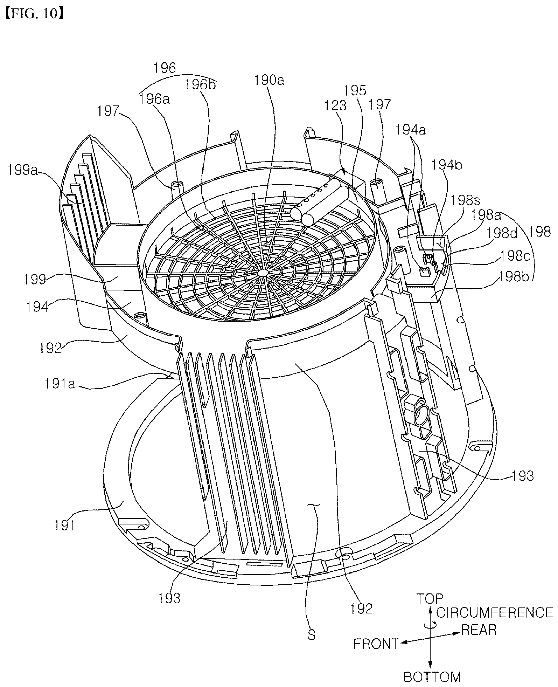

Hereinafter, the filter frame 190 providing a mounting space 198s for mounting the controller 20 will be described with reference to FIG. 10. FIG. 10 illustrates the filter frame 190, from which the filter 120 is removed.

The filter frame 190 may provide a space S in which the filter 120 is removably disposed. The differential pressure sensor 123 for measuring the pressure of air may be disposed over the filter frame 190. The differential pressure sensor 123 may be arranged to pass through the filter 120.

The filter frame 190 may include the lower frame 191 forming a lower side of the filter frame 190, the upper frame 192 disposed over the lower frame 191 at a distance, and the plurality of filter supports 193 extending vertically to connect the lower frame 191 and the upper frame 192.

The lower frame 191 may have an overall annular shape and may form a lower surface of the filter frame 190. The support device 184 (see FIG. 3) may be disposed on the inside of the lower frame 191, and an outer circumferential surface of the support device 184 may come into contact with an inner circumferential surface of the lower frame 191 to be supported by the lower frame 191. The support device 184 may be a support plate supporting the lower surface of the filter 120 when the filter 120 is removed from the space S.

The filter support 193 may extend upwardly from the lower frame 191, and may be coupled to the filter support cover 193a (see FIG. 3) to be formed in the shape of a square column. A plurality of filter supports 193 may be spaced apart in a circumferential direction, and four filter supports 193 may be provided. The filter supports 193 may be disposed intensively on a rear side of the filter frame 190 instead of a front side thereof where the filter 120 is introduced. Accordingly, the filter 120 may be introduced into the filter frame 190 from the front side toward the rear side, such that a rearward movement of the filter 120 may be restricted by the filter supports 193 disposed at the rear side.

The upper frame 192 may be coupled to the upper part of the filter supports 193, to be spaced apart upwardly from the lower frame 191. The upper frame 192 may have an overall cylindrical shape and may form an outer circumferential wall of the upper part of the filter frame 190. The upper frame 192 may extend in a circumferential direction between the plurality of filter supports 193 being spaced apart in a circumferential direction. The upper frame 192 may be arranged to be coupled to each of adj acent filter supports 193. Accordingly, the upper frame 192 may be understood as a structure extending from the upper part of the filter frame 190 in a circumferential direction, to connect the plurality of filter supports 193.

The upper frame 192 may have a sensor assembly cover 199a protruding radially outward from the front side of the filter frame 190, to enclose the sensor assembly 199. The sensor assembly cover 199a may be understood as a radially outwardly protruding portion of the upper frame 192 extending in a circumferential direction. The sensor assembly 199 may be disposed inside of the sensor assembly cover 199a.

The sensor assembly 199 may measure the amount of foreign matter in the air suctioned through the air inlet 112, and may detect concentrations of dust, CO₂, gases, and/or the like. Accordingly, the sensor assembly 199 may be understood as a single module having a dust sensor, a CO₂ sensor, a gas sensor, and/or the like which are assembled with each other.

The filter frame 190 may include a support plate 194 extending radially inward from a lower end of the upper frame 192, and a partition wall 195 extending upward from an inner end of the support plate 194.

The support plate 194 may have an overall annular shape extending in a circumferential direction, and may be coupled to the lower end of the upper frame 192 at a radially outer side of the partitional wall 195. The support plate 194 may be coupled to a lower end of the partition wall 195 at a radially inner side of the upper frame 192. The differential pressure sensor 123 and the sensor assembly 199 may come into contact with the upper surface of the support plate 194, to be supported by the support plate 194. The support plate 194 may include a plurality of low coupling bosses 197, protruding upward from the upper surface of the support plate 194 and being spaced apart from each other in a circumferential direction. The low coupling bosses 197 may serve to connect the fan housing 130 and the filter frame 190. The low coupling bosses 197 may be inserted into the upper coupling boss 139 of the fan housing 130 to be fixed thereto.

The partition wall 195 may have an overall cylindrical shape, and may be spaced apart from the upper frame 192 by the support plate 194 in a radially inward direction. Accordingly, the differential pressure sensor 123 and the sensor assembly 199 may be disposed between the upper frame 192 and the partition wall 195.

A filter outlet 190a, which is a flow passage of air flowing upward after passing through the filter 120, may be formed inside the filter frame 190. The filter outlet 190a may be understood as a cylindrical space formed inside the partition wall 195.

The filter outlet 190a may have a filter frame grill 196 having a mesh shape. The filter frame grill 196 may be in the shape of a spider web, and may have a plurality of first grill frames 196a extending in a radial direction, and a plurality of second grill frames 196b extending in a circumferential direction.

The plurality of first grill frames 196a may extend radially outward from the center P of the filter outlet 190a to the partition wall 195, and may be spaced apart from each other in a circumferential direction. The plurality of second grill frames 196b may be spaced apart from each other in a radial direction and may be disposed in a concentric relationship with respect to the center P of the filter outlet 190a. The filter outlet 190a may be understood as a set of mesh-shaped cells formed by the filter frame grill 196, and air having passed through the filter 102 may flow upward through the filter outlet 190a. The filter outlet 190a may be disposed at the intersection of the first grill frames 196a and the second grill frames 196b.

The upper frame 912 may form a controller housing 198 providing a mounting space 198s in which the controller 20 is disposed. The controller housing 198 may be understood as a radially outwardly protruding portion of the upper frame 192 extending in a circumferential direction, and the controller 20 may be disposed inside the controller housing 198.

The controller housing 198 may have: an outer boundary wall 198s forming the outer surface of the controller housing 198; an inner boundary wall 198b extending radially inward from an end portion of the outer boundary wall 198a; and an outer connecting wall 198c extending upwardly from the outer boundary wall 198a to be coupled to the edge plate 62. The controller housing may further comprise an insertion part 198d forming a space through which the connection plate 60 is inserted. The insertion part 198d may be formed at an upper part of the outer connecting wall 198c.

The outer boundary wall 198a may have an overall rectangular U-shape with an upper portion being partially cut out. The cut-out portion of the outer boundary wall 198a may be understood as the insertion part 198d, through which a portion of the connection plate 60 is inserted when the filter frame 190 is coupled to the fan housing 130.

The outer connecting wall 198c may extend in a circumferential direction of the filter frame 190 from the insertion part 198d of the outer boundary wall 198a, and may protrude from a concave portion of the outer boundary wall 198a having a rectangular U-shape. When the filter frame 190 is coupled to the fan housing 130, the outer connecting wall 198c may partially overlap a rear surface of the connection plate 60, and may be coupled to the connection plate 60 via a predetermined coupling member, inserted into the pair of through holes 60s formed at a lower portion of the edge plate 62. Accordingly, when the filter frame 190 and the fan housing 130 are coupled to each other, the connection plate 60 may be coupled to the controller housing 198 via a predetermined coupling member passing through the outer connecting wall 198c and the through holes 60s, while a lower portion of the connection plate 60 is inserted into the insertion part 198d.

The inner boundary wall 198b may vertically extend in a radially inward direction from both ends of the outer boundary wall 198a, and may be vertically coupled to the upper frame 192. A height of the inner boundary wall 198b may be equal to a height of the outer boundary wall 198a, and a pair of inner boundary walls 198b may be disposed opposite each other.

The mounting space 198s may be understood as a space enclosed by the pair of inner boundary wall 198b and the outer boundary wall 198a, and may be a space formed in the shape of an approximately square column.

A pair of lower fences 194a, extending upwardly from the support plate 194, may be provided in the mounting space 198s. The pair of lower fences 194a may be spaced apart from each other in a circumferential direction, and may be disposed opposite each other. The lower fences 194a may have an overall rectangular U-shape, and the controller 20 may be mounted between the pair of lower fences 194a.

A barrier 194b, extending upwardly from the support plate 194, may be provided in the mounting space 198s. The barrier 194b may vertically extend upward from the support plate 194, and may have an inverted L-shape which is bent radially inward from the upper side. A front surface of the controller 20 may be disposed opposite the barrier 194b, and an outward movement of the controller 20 may be restricted by the barrier 194b.

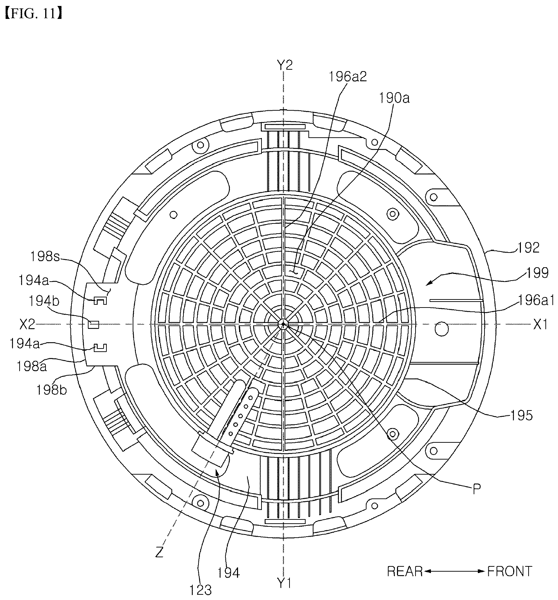

Hereinafter, a structural relationship between the controller 20 and the sensor assembly 199 will be described with reference to FIG. 11. FIG. 11 illustrates a shape of the filter frame 190, as seen from top to bottom.

When the filter frame 190 is viewed from top, the filter frame 190 may have a circular shape with respect to the center P of the filter outlet 190a.

The plurality of first grill frames 196a may extend in a radial direction so that all the first grill frames 196a may pass through the center P. The plurality of first grill frames 196a may include a reference frame 196a1, extending in a direction parallel to the front-rear direction, and an intersecting frame 196a2 extending in a direction intersecting the reference frame 196a1.

The orientation to indicate a relative positional relationship between the differential pressure sensor 123, the sensor assembly 199, and the controller 20 will be described below. The direction of extension of the reference frame 196a1 may be shown by a virtual line X1-X2. As the reference frame 196a1 extends in a direction parallel to the front-rear direction, X1 may correspond to the front side and X2 may correspond to the rear side. The direction of extension of the intersecting frame 196a2 may be shown by a virtual line Y1-Y2, and the differential pressure sensor 123 may be disposed close to the Y1 direction. The virtual line X1-X2 is substantially orthogonal to the virtual line Y1-Y2.

The controller 20 may be disposed at a position intersecting the line XI-X2, and may be disposed at the rear side (X2) on the line XI-X2. The sensor assembly 199 may be disposed at a position intersecting the line X1-X2, and may be disposed at the front side (X1) on the line X1-X2. Accordingly, the controller 20 and the sensor assembly 199 may be disposed in alignment with each other on a virtual line, and may be disposed symmetrical with respect to the center P in the front-rear direction, in other words, with respect to the virtual line Y1-Y2.

The differential pressure sensor 123 may be disposed at a position close to the rear side (X2) with respect to the line Y1-Y2. Further, the differential pressure sensor 123 may be disposed at a position intersecting the line Z having a predetermined included angle θ with the line Y1-Y2.

The sensor assembly 199 may include a dust sensor and a CO₂ sensor, both of which have a heater to heat the air drawn thereinto. The dust sensor and the CO₂ sensor may measure the amount of foreign matter contained in the air by emitting light of a specific wavelength to an ascending air current formed by the air heated by the heater. In this case, interference of radio waves of the controller 20 may occur due to light of a specific wavelength which is emitted from the dust sensor or the CO₂ sensor. Accordingly, when the sensor assembly 199 is disposed near the controller 20, reliability of a radio signal transmitted and received by the controller 20 is reduced by infrared light emanating from the sensor assembly 199. In this respect, by providing the controller 20 at a position spaced apart from the sensor assembly 199 in a circumferential direction, reliability of the radio signal transmitted and received by the controller 20 may be improved.

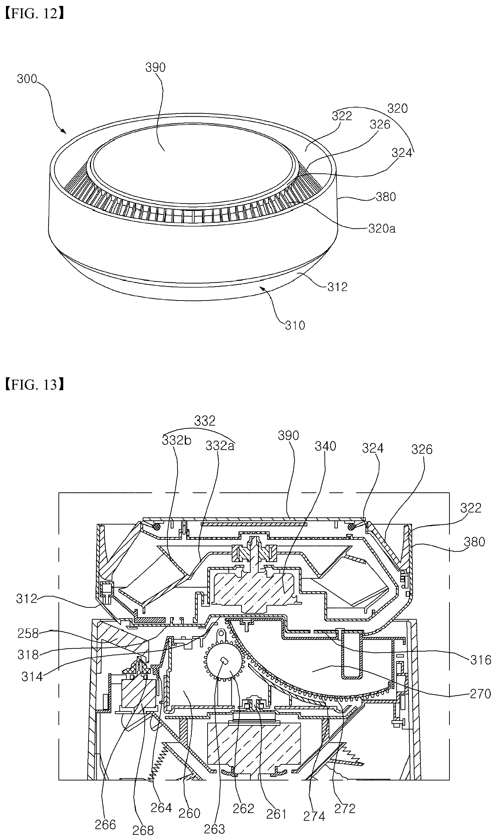

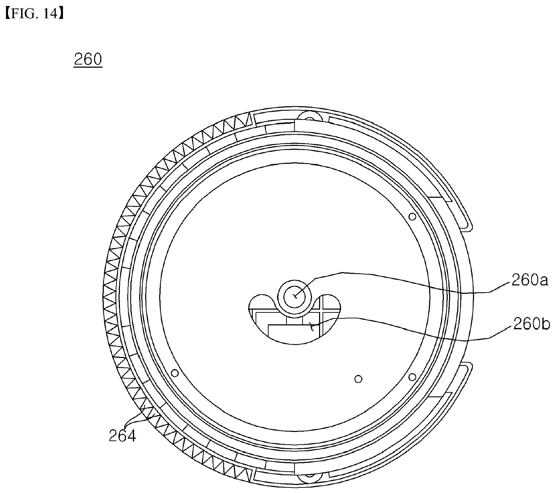

A structure relating to rotation of the circulator 300 by control of the controller 20 will be described below with reference to FIGS. 12 to 14. FIG. 12 is a view of an overall exterior of the circulator 300; FIG. 13 is an enlarged view of the circulator 300 in a longitudinal sectional view of the air cleaner 10; and FIG. 14 is a view, as seen from below, of a moving guider 260 guiding the rotation of the circulator 300.

Referring to FIG. 12, the circulator 300 may include: a lower cover 310 forming the exterior of a lower part of the circulator 300 and coupled to the upper blower unit 200; an upper cover 320 forming the exterior of an upper part of the circulator 300 and disposed over the lower cover 310.

The lower cover 310 may include an outer plate 312 extending radially outward from a lower surface of the lower cover 31, and the outer plate 312 may extend to be inclined upwardly. The lower cover 310 and the upper cover 320 may be coupled to each other by the outer plate 312.

An outer cover 380, forming an outer circumferential surface of the circulator 300, may be disposed outside of the upper cover 320, and the upper cover 320 may be received inside the outer cover 380. The outer cover 380 may be disposed over the lower cover 310 and may be fixed thereto. The outer cover 380 may be rotatably mounted over the lower cover 310.

The upper cover 320 may include a third discharge cover 322 guiding a flow direction of air discharged through the third discharge port 320a. The third discharge cover 322 may have a cylindrical shape, and an outer circumferential surface of the third discharge cover 322 may come into contact with an inner circumferential surface of the outer cover 380.

The upper cover 320 may include a connect ring 324 disposed inside the third discharge cover 322 and at a distance therefrom. The connect ring 324 may have an annular shape, and a lower surface of the connect ring 324 may come into contact with an upper surface of a supporter 370 to be supported thereby.

The connect ring 324 and the third discharge cover 322 may be coupled by the plurality of vanes 326 extending in a radial direction. The plurality of vanes 326 may be spaced apart from each other in a circumferential direction, such that the third discharge port 320a may be formed in between. Each of the plurality of vanes 326 may extend so as to be inclined upwardly in a radially inward direction.

The display 390 may be disposed inside the connect ring 324, and a portion of the outer circumferential surface of the display 390 may come into contact with the inner circumferential surface of the connect ring 324. The display 390 may form the upper surface of the circulator 300.

Referring to FIG. 13, the circulator 300 may be rotatably coupled to the upper blower unit 200, to rotate at the upper side of the upper blower unit 200.

The lower cover 310 of the circulator 300 may include: a first lower plate 314 coupled to the upper blower unit 200; a second lower plate 316 extending radially outward from the first lower plate 314, and coupled to the upper cover 320; and an outer plate 312 spaced apart radially outward of the first lower plate 314, and coupled to the outer cover 380.

The first lower plate 314 may be disposed at the center of the lower cover 310, and the first lower plate 314 and the outer plate 312 may be coupled to each other by a plurality of connection ribs 318 extending in a radially outward direction and spaced apart from each other in a circumferential direction.

The second lower plate 316 may extend from the first lower plate 314 to the outer plate 312, and may be coupled to the upper cover 320 disposed at the upper side.

The first lower plate 314 may be coupled to the upper blower unit 200 by a predetermined coupling member, and may be coupled to the mover 270 of the upper blower unit 200. The first lower plate 314 may be fixed to the mover 270, and may move integrally with the mover 270 according to the movement of the mover 270; and the entire circulator 300 coupled to the first lower plate 314 may be rotatably coupled to the upper blower unit 200 by the movement of the mover 270.

The mover 270 may include a guide plate 272 forming a portion of the outer circumferential surface of the mover 270 and having an arc shape; and a gear rail 274 protruding from the outer circumferential surface of the guide plate 272.

The guide plate 272 may have a downwardly convex shape, and may extend upwardly in a radially inward direction.

The gear rail 274 may be understood as a plurality of gear teeth formed along the outer circumferential surface of the guide plate 272, and may protrude inwardly from the entire outer circumferential surface of the guide plate 272.

The outer circumferential surface of the moving guider 260 may extend in a circumferential direction of the upper blower unit 200 and the circulator 300, and an external gear 264 protruding radially inward may be formed along the outer circumferential surface of the moving guider 260.

The external gear 264 may have a plurality of gear teeth and may extend along the outer circumferential surface of the moving guider 260.

The moving guider 260 may have a first pinion gear 266 engaged with the external gear 264 to rotate together therewith, and a first motor 268 rotating the first pinion gear 266.

A spur gear may be used as the first pinion gear 266, and may be engaged with the external gear 264 at a predetermined gear ratio to rotate about a vertical shaft as a rotation axis.

The first motor 268 may be disposed below the first pinion gear 266, and may supply power for rotation of the first pinion gear 266.

The moving guider 260 may have a space (not shown) formed therein for fixing the mover 270 while the mover 270 is received inside the moving guider 260, and the mover 270 may move integrally with the moving guider 260 according to the movement of the moving guider 260.

When the first motor 268 applies power to the first pinion gear 266 such that the first pinion gear 266 are engaged with the external gear 264 and rotate together, the moving guider 260 rotates around a rotating shaft 261; and by the rotation of the moving guider 260, the mover 270 and the circulator 300 coupled to the mover 270 may rotate in a circumferential direction of the upper blower unit 200.

The moving guider 260 may have a second pinion gear 262 rotating while being engaged with the gear rail 274, and a second motor 263 rotating the second pinion gear 262.

A spur gear may be used as the second pinion gear 262, and may be engaged with the gear rail 274 at a predetermined gear ratio to rotate about a rotating shaft perpendicular to a vertical axis.

The second motor 263 may be disposed radially outward of the second pinion gear 262, and may supply power for rotation of the second pinion gear 262. In the drawings, the second motor 263 is covered by the second pinion gear 263, such that only the rotating shaft of the second motor 263 is shown, in which as the rotating shaft of the second motor 263 passes through the center of the second pinion gear 262, the second pinion gear 262 may be rotated by the rotation of the shaft.

When the second motor 263 applies power to the second pinion gear 262, and the second pinion gear 262 is engaged with the gear rail 274 to rotate together therewith, the gear rail 274 may rotate up and down around the shaft of the second motor 263 as a rotation axis; and by the rotation of the gear rail 274, the mover 270 and the circulator 300 coupled to the mover 270 may rotate to be tilted from the upper blower unit 200.

The circulator 300 may include a third fan 332 disposed inside the circulator 300 and suctioning air, discharged from the upper blower unit 200, to discharge the suctioned air through the third discharge port 320a.

The third fan 332 may include: a shroud 332a coupled to a rotating shaft of the third fan 332; and blades 332b coupled to the shroud 332a to generate an air flow, and coupled to the third fan motor 340 to receive power from the third fan motor 340.

Referring to FIG. 14, a rotating shaft insertion hole 260a formed in a lower surface of the moving guider 260; and an electric wire groove 260b may be formed outside of the rotating shaft insertion hole 260a. The rotating shaft 261 of the moving guider 260 may pass through the rotating shaft insertion hole 260a. An electric wire (not shown) extending from the controller 20 may pass through the electric wire groove 260b.

The rotating shaft insertion hole 260a may be formed at a center portion of the moving guider 260, and the electric wire groove 260b may extend in a circumferential direction of the rotating shaft insertion hole 260a so as to surround a portion of the circumference of the rotating shaft insertion hole 260a. The rotating shaft insertion hole 260a may have a cylindrical shape, and the electric wire groove 260b may have an arch shape.

An electric signal, transmitted from the control part 42 of the controller 20, may be transmitted to the first motor 263 and the second motor 268 through the electric wire (not shown) connected to the controller 20. The first motor 263 and the second motor 268 may be electrically connected to the electric wire (not shown), which extends by passing through the electric wire groove 260b, and may apply power to each of the first pinion gear 262 and the second pinion gear 266 based on the transmitted electric signal.

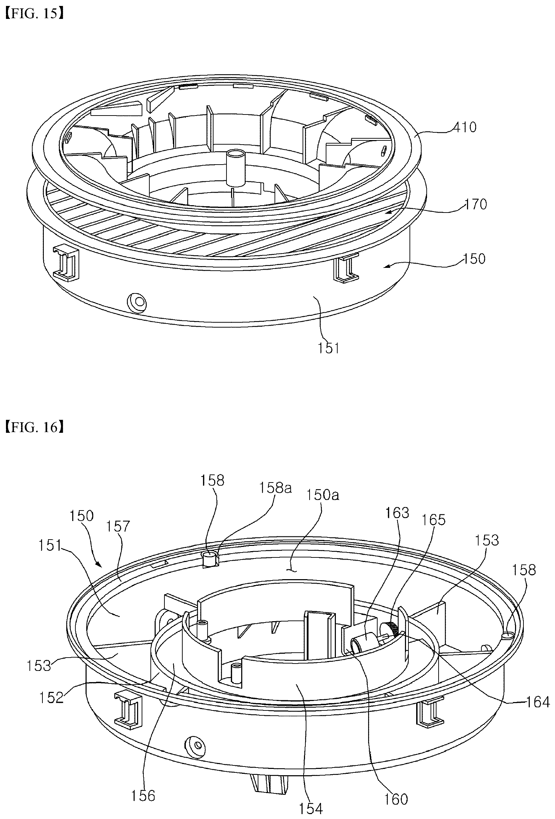

Hereinafter, a structure relating to rotation of the discharge guider 170 by control of the controller 20 will be described with reference to FIGS. 15 to 19. FIG. 15 is a view of the discharge guider 170 exposed to the discharge body 150; FIG. 16 is a view of the discharge body 150, from which the discharge guider 170 is removed; FIG. 17 is a perspective view of the discharge guider 170; FIG. 18 is a view of the discharge guider 170, as seen from bottom to top; and FIG. 19 is a cross-sectional view of vanes 173 of the discharge guider 170.

Referring to FIG. 15, the discharge guider 170 may be disposed inside the discharge body 150. The overall shape of the discharge body 150 may be a hollow cylindrical shape, and the discharge guider 170 may be mounted inside the discharge body 150.

The stem 410 of the shield body 400, which is coupled to the upper blower unit 200, may be disposed above the discharge body 150.

Referring to FIG. 16, the discharge body 150 may include: an outer body 151 forming the exterior of the discharge body 150; an inner body 152 disposed inside the outer body 151 and at a distance therefrom; and connection ribs 153 connecting the outer body 151 and the inner body 152. An air outlet 150a having an annular shape may be formed between the outer body 151 and the inner body 152.

The outer body 151 and the inner body 152 may have a cylindrical shape and may be in a concentric relationship, and a plurality of connection ribs 153 may extend in a radial direction and may be spaced apart from each other in a circumferential direction.

A fixing body 154, coupled to the discharge guider 170, may be disposed inside of the inner body 152, and the fixing body 154 may be coupled to the inner body 152 by a connection rim 156 extending in a circumferential direction.

The fixing body 154 may have a cylindrical shape and may be in a concentric relationship with the inner body 152; and the connection rim 156 may have an annular shape and may be disposed between the fixing body 154 and the inner body 152 to connect the two bodies.

A mounting portion 157 for supporting the discharge guider 170 may be formed at the outer body 151. The mounting portion 157 may have an overall annular shape and may extend in a circumferential direction from the upper portion of the inner circumferential surface of the outer body 151.

The mounting portion 157 may have a bearing groove 158a being open from top to bottom, and a second bearing 158 coming into contact with the discharge guider 170 may be disposed at the bearing groove 158a.

A motor sheet 160, on which the third motor 163 is disposed, may be provided inside the discharge body 150. The motor sheet 160 may be coupled to the fixing body 154 to extend in a radially inward direction.

The motor sheet 160 may provide a space for mounting the third motor 163, and may be understood as a housing extending radially inward from a cut-out outer wall of the fixing body 154.

The third motor 163 may be mounted in the motor sheet 160, and a third shaft 164 extending radially outward from the third motor 163 may be coupled to a third pinion gear 165 to rotate the third pinion gear 165.

Referring to FIG. 17, the discharge guider 170 may have an overall annular shape and may be formed in a grill shape.

The discharge guider 170 may include: an outer frame 171 forming the exterior of the discharge guider 170; an inner frame 172 disposed inside the outer frame 171 and at a distance therefrom; and a plurality of discharge vanes 173 disposed between the outer frame 171 and the inner frame 172.

Each of the plurality of discharge vanes 173 may extend parallel to each other, and may be spaced apart from each other in a front-rear direction.

The discharge guider 170 may include: a lower plate 174 extending radially inward from the inner frame 172; and an upper plate 176 extending radially outward from the outer frame 171.

The upper plate 176 may come into contact with an upper surface of the mounting portion 158 of the discharge body 150, and may be mounted in the discharge body 150 by the mounting portion 158.

A plurality of guide rails 175 protruding downwardly may be formed at the lower plate 174. The guide rails 175 may have a plurality of gear teeth and may extend in a circumferential direction of the discharge guider 170.

A plurality of vertical ribs 177 may be spaced apart from each other on the lower plate 174 in a circumferential direction, and the vertical ribs 177 may connect the lower plate 174 and the inner frame 172.

The discharge guider 170 may include: a first bearing 178 protruding upwardly from an upper surface of the lower plate 174; and a stopper 179 protruding radially inward from an inner circumferential surface of the inner frame 172.

The first bearing 178, the second bearing 158, and the stopper 179 may restrict the radius of rotation of the discharge guider 170.

Referring to FIG. 18, the third pinion gear 165 may be engaged with the guide rails 175 to rotate together therewith; and when the third pinion gear 165 rotates by receiving power from the third motor 163, the guide rails 175 may rotate while being engaged with the third pinion gear 165, thereby allowing the discharge guider 170 to rotate in a circumferential direction of the lower blower unit 100.

The third motor 163 may be electrically connected to the electric wire (not shown) extending from the control part 42 of the controller 20, and may rotate the third pinion gear 165 based on the electric signal transmitted from the control part 42.

Referring to FIG. 19, the discharge vanes 173 may be inclined toward the upper side. The discharge vanes 173 may extend vertically between the outer frame 171 and the inner frame 172, and may extend so as to be inclined upwardly toward the outer frame 171.

Accordingly, a lower end 173a of the discharge vanes 173 may be disposed further away from the outer frame 171 than an upper end 173b of the discharge vanes 173.

The upper end 173b of the discharge vanes 173 may have an inclination angle θ with respect to a horizontal axis, and air discharged through the third discharge port 150a may be discharged from the lower blower unit 100 with directivity by the inclination angle θ of the upper end 173b of the discharge vanes 173.

Hereinafter, an operating principle of the controller 20 according to the present disclosure will be described with reference to FIG. 20. In FIG. 20, (a) is a schematic diagram illustrating an arrangement of the air cleaner 10 and a plurality of air quality sensors 70 which are disposed in an indoor space I; and (b) is a block diagram illustrating a control method of the controller 20. FIG. 20 is a conceptual view of the indoor space I, which is simplified for convenience of explanation, for explaining a method of controlling the air cleaner 10 by the controller 20.

A plurality of air quality sensors 70 are disposed in the indoor space I. The plurality of air quality sensors 70 are spaced apart from each other, and may detect the air quality at the disposed position. The air quality sensors 70 may detect air quality information on concentrations of dust, CO₂, and gases, temperature and humidity information, and the like.

The air quality sensors 70 may be disposed on each inner wall of the indoor space I having an approximately cubic shape. Accordingly, the air quality sensors 70 may comprise at least two of a first air quality sensor 71, a second air quality sensor 72, a third air quality sensor 73, a fourth air quality sensor 74, a fifth air quality sensor 75, and a sixth air quality sensor 76. However, the number of air quality sensors 70 is not limited thereto, and various numbers thereof may be disposed in the indoor space I. At least one of the air quality sensors 70 together with the air cleaner described above may constitute an air cleaning system.

Each of the plurality of air quality sensors 70 may include an Ultra-Wide Band (UWB) chip and may transmit the sensed air quality information of ambient air as radio signals to the outside.

The controller 20, disposed in the air cleaner 10, may receive the radio signals transmitted from the air quality sensors 70. The position sensor 30 may detect arrangement positions and angles of the air quality sensors 71, 72, 73, 74, 75, and 76 which generate the radio signals, and may wirelessly communicate with the respective air quality sensors 71, 72, 73, 74, 75, and 76 through radio waves.

Based on the air quality information received from the respective air quality sensors 71, 72, 73, 74, 75, and 76, the data processor 40 may determine an area having a high pollution level in the indoor space I. The data processor 40 may be connected to the position sensor 30 to receive position information of the area having the high pollution level, and may control the motors 268, 263, and 163 so that the circulator 300 and the discharge guider may discharge clean air toward the area.

Considering that the motors 268, 263, and 163 control a flow direction of air discharged to the outside of the blower units 100 and 200 by the blower unit fans 132 and 232, the motors 268, 263, and 163 may be included in the wind direction control unit 80. The air direction control unit 80 may include the first motor 263, the second motor 268, and the third motor 163.

Further, the controller 20 may generate radio waves to be transmitted to the outside of the air cleaner 10 through the transmission antenna 31, and the generated radio waves may travel along a first path T1 toward a user C present in the indoor space I. While traveling along the first path T1, the radio waves hit the user C to travel along a second path T2 toward the reception antenna 32. The controller 20 may detect a position of the user C based on the radio waves traveling along the first path T1 and the second path T2, and may control the motors 268, 263, and 163 so that the circulator 300 and the discharge guider 170 may discharge clean air toward the position of the user C.

While the present disclosure has been particularly shown and described with reference to preferred embodiments thereof, it will be understood by those skilled in the art that the present disclosure is not limited to those exemplary embodiments and various changes in form and details may be made therein without departing from the scope and spirit of the invention as defined by the appended claims and should not be individually understood from the technical spirit or prospect of the present disclosure.

## Claims

1. An air cleaner (10), comprising:
a blower unit (200; 100, 200) having a blower unit fan (232; 132, 232) disposed therein, and an air inlet (212; 112, 121) formed therein;
a filter (220; 120, 220) configured to filter out foreign substances contained in air suctioned through the air inlet (212; 112, 212) into the blower unit (200; 100, 200);
a wind direction control unit (80) configured to control a flow direction of air discharged from the blower unit (200; 100, 200) by the blower unit fan (232; 132, 232); and
a controller (20) configured to control the wind direction control unit (80) based on information on air quality outside of the blower unit (200; 100, 200), the information being received by the air cleaner (10) from the outside .

2. The air cleaner (10) of claim 1, wherein the controller (20) comprises:
a position sensor (30) configured to receive the information on the air quality outside of the blower unit (200; 100, 200); and
a data processor (40) configured to control the wind direction control unit (80).

3. The air cleaner (10) of any one of claims 1 and 2, wherein the controller (20) is configured to wirelessly communicate with one or more air quality sensors for detecting the air quality outside of the blower unit (200; 100, 200), preferably using Ultra-Wide Band (UWB) communications.

4. The air cleaner (10) of any one of claims 1 to 3, wherein the wind direction control unit (80) comprises a discharge guider (170) which is rotatably disposed at the blower unit (200; 100, 200) and which is controllable by the controller (20).

5. The air cleaner (10) of any one of claims 1 and 4, wherein the wind direction control unit (80) comprises a circulator (300) which is tiltably coupled to the blower unit (200; 100, 200), and which is controllable by the controller (20).

6. The air cleaner (10) of any one of claims 1 to 5, further comprising a fan housing (230; 130, 230) in which the blower unit fan (232; 132, 232) is disposed, the fan housing (230; 130, 230) having a receiving space for accommodating the controller (20).

7. The air cleaner (10) of claim 6, wherein the fan housing (230; 130, 230) have a reinforcement rib (137c) extending in a circumferential direction from a position where the controller (20) is located.

8. The air cleaner (10) of any one of claims 6 and 7, wherein the fan housing (230; 130, 230) have a housing plate (135) extending inward of the fan housing (230; 130, 230) between the controller (20) and the blower unit fan (232; 132, 232).

9. The air cleaner (10) of any one of claims 6 to 8, further comprising:
a filter frame (290; 190, 290) which the filter (220; 120, 220) is mounted on and detachable from, and which have a controller housing (198) forming the receiving space for the controller (20),
wherein the controller (20) is disposed between the fan housing (230; 130, 230) and the filter frame (290; 190, 290).

10. The air cleaner (10) of claim 9, further comprising a sensor assembly (199) disposed between the fan housing (230; 130, 230) and the filter frame (290; 190, 290),
wherein the controller (20) is disposed at a position spaced apart from the sensor assembly (199) in a circumferential direction.

11. The air cleaner (10) of any one of claims 9 and 10, wherein the filter frame (290; 190, 290) have a pair of lower fences (194a) spaced apart from each other in a circumferential direction of the blower unit (200; 100, 200).

12. The air cleaner (10) of any one of claims 9 to 11, wherein the fan housing (230; 130, 230) has a connection plate (60) protruding toward the filter frame (290; 190, 290),
wherein the connection plate (60) is at least partially inserted into the filter frame (290; 190, 290) to be coupled to the filter frame (290; 190, 290).

13. The air cleaner (10) of claims 1 to 12, further comprising:
a coupling member (51) coupled to the blower unit (200; 100, 200) at a position radially inward of the position where the controller (20) is disposed, so as to fix the controller (20) to the blower unit (200; 100, 200); and
a pressing member (52) through which the coupling member (51) passes, and which is pressed against the controller (20).

14. The air cleaner (10) of any one of claims 1 to 13, wherein the blower unit (200; 100, 200) comprise:
a support rib (137e) on which the controller (20) is mounted; and
a pair of upper fences (137d) spaced apart from each other in a circumferential direction of the blower unit (200; 100, 200).

15. An air cleaning system comprising:
the air cleaner (10) of any one of the preceding claims; and
one or more air quality sensors (70) for detecting the air quality outside of the blower unit (200; 100, 200), the one or more air quality sensors (70) being disposed spaced apart from the air cleaner (10) and configured to transmit the information on the detected air quality.
